# EUROPEAN PATENT APPLICATION

(11) **EP 2 765 307 A1**
(43) Date of publication of application: **13.08.2014**
(21) Application number: 13000617.4
(22) Date of filing: 07.02.2013
(51) Int. Cl.: F03D 11/00

(54) **Sensor system and method for monitoring and processing of blade sensor signals in a wind turbine**

(71) Applicant: SSB Wind Systems GmbH & Co. KG, 48499 Salzbergen (DE)
(72) Inventor: Bertolotti, Fabio, 48455 Bad Bentheim (DE)

(57) **Abstract**

The invention relates to a sensor system for a wind turbine (1) having a rotor and a first blade (10) on which a first blade sensor (100) is located, said first blade sensor (100) generating a first blade signal (110) indicative of at least one physical state of first blade (10), comprising: A first blade processing unit (120) receiving the first blade signal (110) and computing a first "A" value (130) indicative of a first loading value associated with the energy production of the wind turbine, a first auxiliary sensor (200) located on the wind turbine at a location different from the first blade (10), and generating a first auxiliary signal (210), a first auxiliary processing unit (220) receiving the first auxiliary signal (210) and computing a second "A" value (230) indicative of said first loading value, the computation being done without the use of, and independently of the first blade signal (110), whereby a third auxiliary sensor (300) located on the wind turbine (1) at a location different from the first blade (10), and generating a second auxiliary signal (310), a third auxiliary processing unit (320) receiving the third auxiliary signal (310) and computing a third "A" value (330) indicative of said first loading value, the computation being done without the use of, and independently of, the first blade signal (110) and the first auxiliary signal (210), and a first physical value comparator (400) receiving the first "A" value (130), the second "A" value (230) and the third "A" values (330) producing a first physical comparison signal (402) indicative of the difference between the first "A" value (130) and the second "A" value (230), and the third "A" value (330), and produces a first physical comparison signal (410) indicative of all possible differences between the three A" values (130, 230, 330.

The invention comprises also a method for monitoring and processing of the sensor system wherein the three "A" values (130, 230, 330) are communicated to the first physical value comparator (400) and compared to one another and the first physical comparison signal (410) is used as a fault isolation logic for identifying which of the three "A" signals is trustworthy or not. A

A wind turbine having the sensor system and the method for monitoring and processing of the blade sensor system is also claimed.

## Description

The invention relates to a sensor system for a wind turbine according to the preamble of claim 1 and a method for monitoring and data processing of said sensor system. The invention relates further to a wind turbine having a rotor with at least one blade attached to the rotor.

Blade sensors are used to measure strain and acceleration in a wind turbine blade. Their signals are used for monitoring the blade health as well as for controlling the wind turbine operation, such as controlling the pitch angle of the blades. Additional information, such as the wind characteristics over the blade swept area, can also be extracted from the blade sensor signals.

It is known in the art that each blade sensor can produce errors in the sensor signal during operation. Drift due to temperature is always a possible cause for errors. Also, blade sensors based on strain typically measure only a very small area of the blade surface, and the presence of localized damage under the sensor location, such as delamination or material cracking, can cause the measured strain to be no longer indicative of the strain in the main load carrying members of the blade. Blade sensors based on optical detection of blade deflection can suffer from errors caused by shifts and offsets in the optical system. Consequently, their sensor signal will begin to drift away from the expected value without warnings to the user of the sensor data. While recalibration may help identify the drift, the recalibration process cannot be performed during regular, or normal, operation, since the recalibration process involves moving the rotor in a selected manner and at specific wind conditions. Thus, calibration can only take place when the weather cooperates, and must interrupt normal turbine operation.

The state of the art suggests methods to detect sensor error based on redundancy. This redundancy is provided either by a second sensor of equal type and located in close proximity to a first sensor, or by a second sensor located at some distance to the first and operating, or measuring, other physical quantities.

For example, US A 20090169357 proposes a sensor system in a wind turbine intended to correct offsets errors within the sensor system. A first and a second set of sensors is located in locations selected to measure vector loads in a first set of coordinates and a second set of sensors in locations selected to measure vector loads in a second set of coordinate wherein the first set of coordinates and the second set of coordinates rotate with respect to one another when the rotating machine is operating. The measurement from either or both the first set sensors and the second sets of sensors are utilized to correct offsets errors in vector loads measured by the other set of sensors.

Smolka, U. et al. "Fault Tolerant Blade Load Monitoring for an Individual Pitch Controlled Wind Turbine", European Wind Energy Association - Brussels, March 17th 2011, describes a sensor system having a blade sensor. Redundancy is provided by comparing the signal from said blade sensor with a calculated, or estimated, signal produced using an "observer" algorithm based on one or more signals typically made available by the turbine's own SCADA system. An alarm is generated when the deviation between the first signal and the estimated signal exceeds a preset value.

These known embodiments of a blade sensor system cannot identify the trustworthiness of a blade sensor, because the systems are based on a comparison between two signals, and can, therefore, at best indicate only a deviation between the two signals. It is not possible to determine from a comparison of two signals alone which of the two sensor signals are correct and which is in error.

An objective of the invention is a blade sensor system for wind turbines capable of identifying the trustworthiness of the blade sensor signals, the identification being performed continuously and at all times during regular operation. A further objective of the invention is a blade sensor system capable of correctly discerning between a true measurement value and a measurement error, so as to prevent false alarms being issued. Yet a further objective of the invention a blade sensor system capable of identifying drifts in blade sensor signals at the very beginning of the drift process, so that remedial action can be taken.

The object is achieved by a sensor system according to claim 1 and by a method for monitoring and processing of said sensor system according claim 17. Various aspect, advantages and features of the invention are apparent from the dependent claims, the description and the accompanying drawings.
Fig. 1 shows an embodiment of a wind turbine;
Fig. 2 shows schematically a sensor system in a first embodiment with one sensor in a blade of the turbine;
Fig. 3 shows schematically a sensor system in an alternative arrangement of figure 2.
Fig. 4 shows a third embodiment of the invention with two blade sensors located on the same blade of the turbine.
Fig. 5 shows a sensor system in a multi blade rotor configuration with one blade sensor in each blade.
Fig. 6 shows a sensor system in a multi blade rotor configuration with two blade sensors in each blade.
Fig. 7 shows a variation of the embodiment of figure 6.

Reference will now made in detail to the various embodiments, one or more examples of which are illustrated in each figure. Each example is provided by way of explanation and is not meant as limitation. For example features illustrated or describes as part of one embodiment can be used on or in conjunction with other embodiments to yield yet further embodiments it is intended that the present invention includes such modifications and variations.

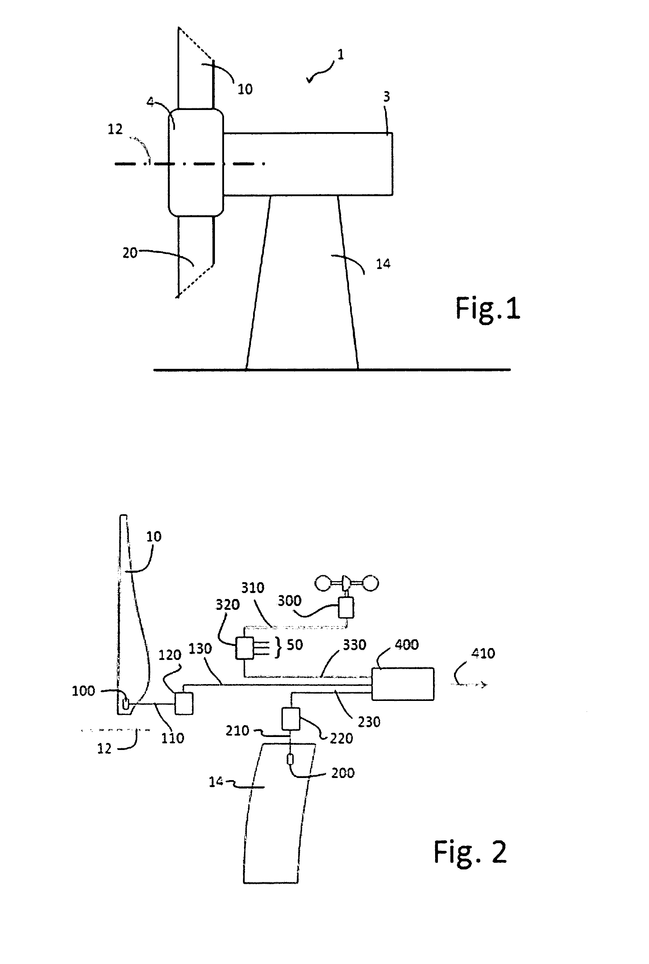

Figure 1 shows a wind turbine 1. The turbine 1 includes a tower 14 on which a nacelle 3 is mounted. The nacelle 3 is rotatable about a vertical axis of the turbine tower 14. Within the nacelle 3, a generator (not shown) for transforming rotational energy into electrical energy is placed. The generator is connected to a hub 4 that rotates about a horizontal rotor axis 12. One or more rotor blades are connected to the hub 4 to form the rotor of the wind turbine 1. Figure 1 shows only two blades, whereby the blade above the rotor axis 12 is noted with the notation "first blade" 10 and the blade under the rotor axis 12 is noted with the notation "second blade"20.

Fig. 2 shows schematically a sensor system in a first embodiment with one sensor in a blade of the turbine; whereby a first blade sensor 100 is located on first blade 10 and produces a first blade signal 110 indicative of at least one physical state of first blade 10. Examples of such a physical state are blade deformation, measured as either blade deflection or as strain in the material of the blade, and blade acceleration. A first blade-processing unit 120 receives the first blade signal 110 and computes a first "A" value 130 indicative of a first loading value associated with the energy production of the wind turbine 1. Examples of the first loading value are rotor thrust along the rotor axis direction 12, rotor torque about the rotor axis direction 12, and one or more characteristics of the wind field powering the wind turbine 1. The letter "A" is used here merely as a label denoting association of the value 130 with said first loading value.

A first auxiliary sensor 200 producing a first auxiliary signal 210 is located on the turbine. A first auxiliary processing unit 220 receives the first auxiliary signal 210 and computes a second "A" value 230 indicative of said first loading value associated with the energy production of the wind turbine 1. The computation within the first auxiliary processing unit 220 is performed without use of, and independently from, the first blade signal 110. As example, the first auxiliary sensor 200 measures displacements along the rotor axis 12 direction of the turbine tower 14 relative to ground.

The sensor system has a second auxiliary sensor 300 located on the wind turbine producing a second auxiliary signal 310. As example, the second auxiliary sensor 300 measures the wind characteristics behind, or in front, of the rotor. A second auxiliary processing unit 320 receives the second auxiliary signal 310 and computes the third "A" value 330 indicative of said first load value associated with the energy production of the wind turbine 1, the computation in the second auxiliary processing unit 320 being performed without use of, and independently from, the first blade signal 110 and the first auxiliary signal 210.

The first "A" value 130, the second "A" value 230, and the third "A" value 330 are communicated to a first physical value comparator 400, wherein an analysis of the three values is performed to isolate sensor errors or drifts. As an example, the analysis comprises taking the mean of the three values and computing the magnitude of the deviation of each individual value from the mean. A sensor fault can thereby be identified when the magnitude of any one of the three deviations exceeds a predetermined threshold. The result of the comparator 400 is communicated through a first comparator signal 410 to the main turbine controller or other destination. In particular, in case that one of the three sensors is defective, the tree-way comparison allows the first physical value comparator 400 to identify which of the three "A" signals is not trustworthy. In case of agreement, the comparator 400 can conclude that all "A" signals 130, 230, 330 are trustworthy, and, hence, that the blade sensor 100 is working properly.

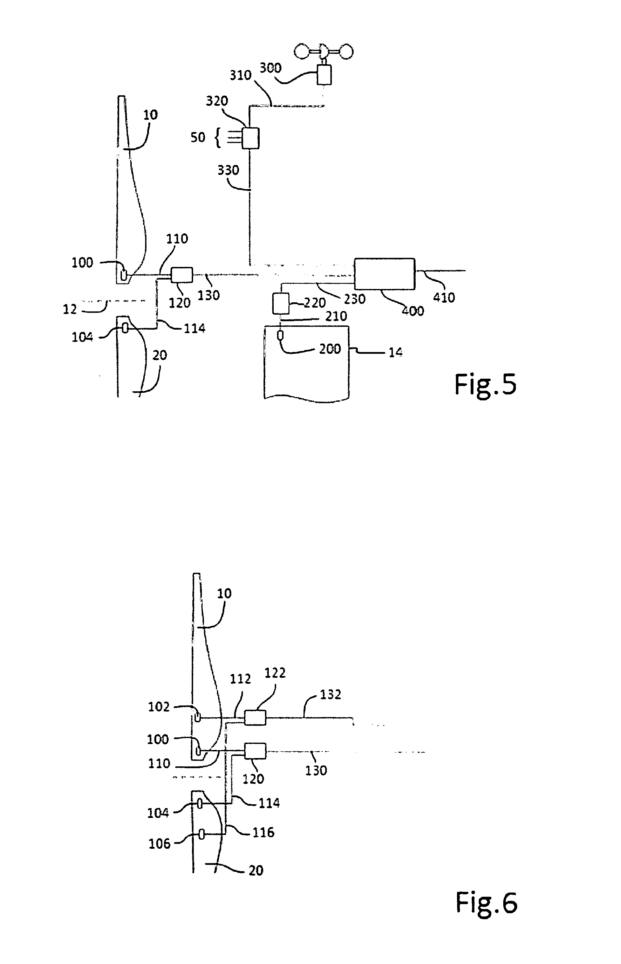

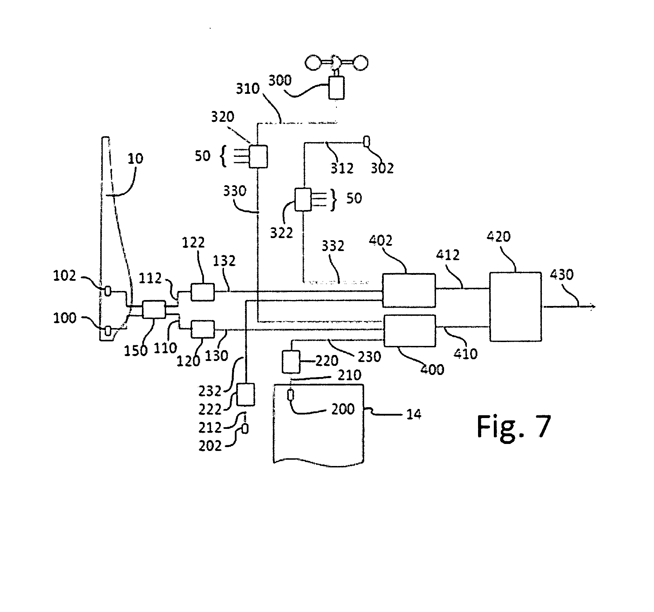

The computational steps performed by the first blade-processing unit 120, the first axillary processing unit 220, as well as the second auxiliary processing unit 320 can involve commonly measured quantities within the turbine 1. Examples of commonly measured values are the rotor speed, the rotor azimuthal position, the generator power, the ambient temperature, turbine control state (e.g. power regulation, power curtailment), yaw position of the nacelle, and the blade pitch angles. When these commonly measured values are part of the turbine's SCADA system, as is usually the case, the processing units 120, 220, 320 communicate with the SCADA system to obtain these commonly measured values, as necessary for the computation of the state values. When some of these commonly measured quantities are not part of the SCADA signal, they are measured and made available independently. Without loss of generality, hence, we refer herein to these commonly measured quantities as "SCADA" signals. In figure 5 and 7, SCADA signals 50 entering the second auxiliary processing unit 320 are explicitly shown.

It is advantageous to use either rotor thrust or rotor torque as a first loading value associated with the energy production of the wind turbine 1, because the contribution of first blade 10 to rotor thrust and torque can be computed without explicit knowledge of the aerodynamic efficiency of first blade 10. In particular, the computation of the first "A" signal 130 can be performed by the first blade-processing unit 120 without knowledge of the aerodynamic state of first blade 10.

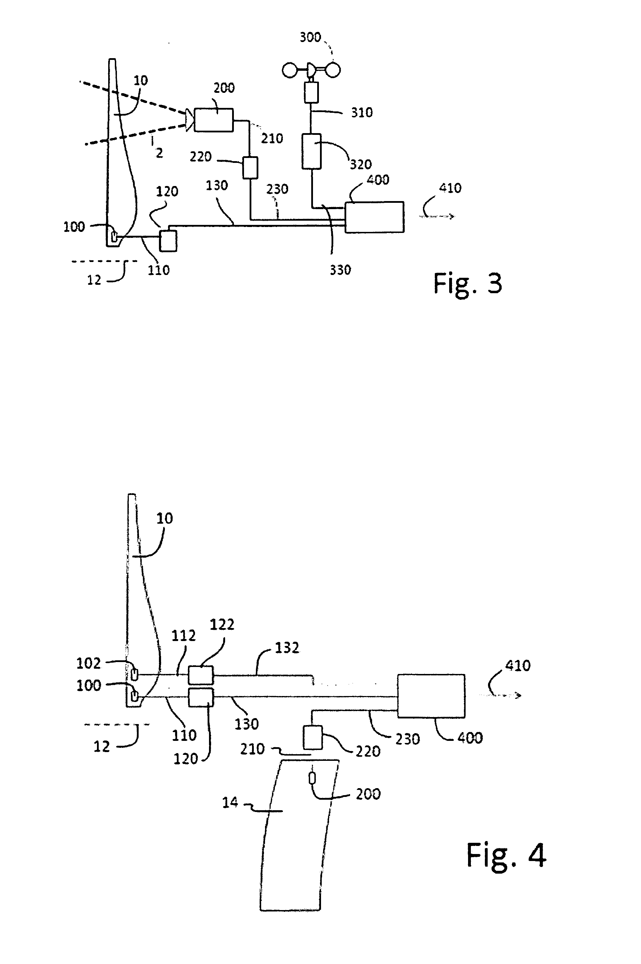

Figure 3 shows schematically the sensor system in an alternative arrangement. The first auxiliary sensor 200, shown in figure 3, is a wind field measurement unit measuring the wind field characteristics ahead of the rotor. Examples of such a measurement unit are the LIDAR and SODAR devices, both well known in the art, which emit electromagnetic or acoustic waves 2, respectively, into the atmosphere and deduce the air velocity by measuring the Doppler shift in the reflected signal. The remote wind field unit generates the first auxiliary signal 210 indicative of the wind field ahead of the wind turbine 1. The first auxiliary processing unit 220 receives the first auxiliary signal 210 and computes the second "A" value 230 indicative of said first loading value associated with the energy production of the wind turbine 1. When said first loading value is chosen as a wind field characteristic, the computation directly follows from the first auxiliary signal 210. When the first loading value is chosen as rotor thrust or torque, the first auxiliary processing unit 220 makes use of both the first auxiliary signal 210 and the SCADA signals 50 provided by the wind turbine to perform the computation. This computation involves a numerical value indicative of the aerodynamic efficiency of the rotor, and this numerical value can be taken from a database stored electronically as data inside the first auxiliary processing unit 220.

Figure 4 shows another embodiment of the invention in which a second blade sensor 102 is located on first blade 10 and produces a second blade signal 112 indicative of at least one physical state of first blade 10. A second blade-processing unit 122 receives the second blade signal 112 and computes a first "B" value 132 indicative of a first loading value associated with the energy production of the wind turbine 1. The computation of the first "B" value 132 is performed without use of, and independently from, first blade signal 110. The computation of the second "A" value 230 is follows the process described above. The first "A" value 130, the second "A" value 230, and the first "B" value 132 are communicated to a first physical value comparator 400, wherein an analysis of the three values is performed to isolate sensor errors or drifts. The result of the comparator 400 is communicated through a second comparator signal 410 to the main turbine controller or other destination. In particular, in case that one of the three sensors is defective, the tree-way comparison allows the first physical value comparator 400 to identify which of the three signals 130, 230, and 132 is not trustworthy. In case of agreement, the comparator can conclude that all signals are trustworthy, and, hence, that the blade sensors 100 and 102 are working properly.

When the rotor comprises a plurality of blades, the rotor thrust and rotor torque are best computed as the sum of all individual blade thrusts and torques, respectively. Without loss of generality, and in the interest of brevity, the following embodiment is specific to a two bladed rotor. Adaptation of the invention to three, or more, bladed rotors is straight forward.

A two blade rotor, schematically shown in figure 5, has a first blade 10 with the first blade sensor 100, producing first blade signal 110, and has a second blade 20 with a third blade sensor 104, producing a third blade signal 114, the first blade-processing unit 120 receiving the first blade signal 110 and the third blade signal 114 and computing a first "A" value 130 indicative of a first physical state associated with the wind turbine 1.

The first auxiliary processing unit 220 receives the first auxiliary signal 210 and computes the second "A" value 230 indicative of said first physical state associated with the wind turbine, the computation being performed without use of, and independently from, the first blade signal 110 and the third blade signal 114.

The sensor system has a second auxiliary sensor 300 located on the wind turbine producing a second auxiliary signal 310. A second auxiliary processing unit 320 receives the second auxiliary signal 310 and computes the third "A" value 330 indicative of said first load values associated with the wind turbine, the computation being performed without use of, and independently from, the first blade signal 110, the third blade signal 114, and the first auxiliary signal 210.

The first "A" value 130, the second "A" value 230, and the third "A" value 330 are communicated to the first physical value comparator 400, and compared to one another in the three-way comparison. The result of the comparator is communicated through the first comparator signal 410 to the main turbine controller or other destination. In case of agreement, the comparator can conclude that all "A" signals are trustworthy, and, hence, that the combination of blade sensor 100 and third blade sensor 104 is working properly. In case that one of the three "A" value signals deviates from the mean of the three "A" signals by more than a predetermined threshold amount, the first comparator signal is set to "disagreement". As an example of additionally steps that can be taken in sensor health diagnosis, in case the first "A" signal 130 is identified as deviatory, a further check is made, wherein:
(a) A new computation of the first "A" value 130 by the first blade-processing unit 120 is performed, wherein the value of third blade signal 114 is replaced with the value of first blade signal 110, to produce a first modified "A" value signal 130-a;
(b) the first modified "A" value 130-a, the second "A" value 230, and the third "A" value 330 are communicated to the first physical value comparator 400, and compared to one another in the three-way comparison: Agreement implies that the third blade signal 114 is untrustworthy. If the comparator 400 continues to see disagreement of the modified "A" signal 130-a with respect to the other "A" signals 230 and 330, then
(c) a further computation of the first "A" value 130 by the first blade-processing unit 120 is performed, wherein the value of first blade signal 110 is replaced with the value of third blade signal 114, to produce a second modified "A" value signal 130-b,
(d) the second modified "A" value 130-b, the second "A" value 230, and the third "A" value 330 are communicated to the first physical value comparator 400, and compared to one another in the three-way comparison: Agreement implies that the blade signal 110 is untrustworthy.

In this fashion, not only can the health state of the combined blade sensors, as a single unit, be made, but also the status of each blade sensor 100 and 104 can be assessed individually.

Figure 6 shows another embodiment of the invention in which the topology of two sensors per blade of figure 4 is united to the topology of combined sensors across all blades, of embodiment of figure 5. The first blade-processing unit 120 receives first blade signal 110 from blade 10 and third blade signal 114 produced by sensor 104 on second blade 20. Similarly, the second blade processing unit 122 receives second blade signal 102 from blade 10 and a fourth blade signal 116 from fourth blade sensor 106 on blade 20.

Often, a sensor unit can make two or more independent measurements by processing two independent raw sensor signals with the same hardware and software to produce two or more sensor signals. Examples of such sensor units are digital cameras, which have a planar image sensor in which the horizontal and vertical pixel locations provide independent signals. Given the two-dimensional pixel coordinates, a common electronic unit to process the pixel coordinates into signals indicative of displacements with two degrees of freedom. Another example are strain gauge systems having two or more strain gauges for measuring blade deflection in two directions, and a common electronic processing unit to change the raw current signals delivered by the strain gauges into strain data.

In reference to figure 7, a first blade sensor 100 is located on first blade 10 and provides a first raw signal to a first sensor processor 150 that transform the first raw signal into a first blade signal 110 indicative of at least one physical state of first blade 10. A second blade sensor 102 is located on first blade 10 and provides a second raw signal to the first sensor processor 150, which, in turn, transforms the second raw signal into a second blade signal 112 indicative of at least one physical state of first blade (10).

The union of elements 110, 120, 130, 200, 210, 220, 230, 300, 310, 320, 330 and 400 work together as described in the above mentioned embodiments to generate the second comparator signal 410. In case of agreement between "A" values 130, 230, and 330, the first physical value comparator 400 can conclude that "A" values 130, 230, 330 are trustworthy, and, hence, that the combination of blade sensor 100, first sensor processor 150, and first blade-processing unit 120 is working properly.

Additionally, a second blade-processing unit 122 receives the second blade signal 112 and computes a first "B" value 132 indicative of a second physical state associated with the wind turbine, such as, for example, rotor thrust or torque about the rotor axis 12 direction, preferably different from the first physical state associated with the wind turbine reported by "A" signal 130. As further shown in figure 7, a third auxiliary sensor 202 producing a third auxiliary signal 212 is located on the wind turbine. A third auxiliary processing unit 222 receives the third auxiliary signal 212 and computes a second "B" value 232 indicative of a second load value associated with the wind turbine, the computation being performed without use of, and independently from, the first blade signal 110, the second blade signal 112, and first auxiliary signal 210.

A fourth auxiliary sensor 302 is located on the wind turbine and produces a fourth auxiliary signal 312. As example, the fourth auxiliary sensor 302 measures the wind characteristics behind, or in front, of the rotor. A fourth auxiliary processing unit 322 receives the fourth auxiliary signal 312 and computes the third "B" value 332 indicative of said second load value associated with the energy production of the wind turbine 1, the computation in the fourth auxiliary processing unit 322 being performed without use of, and independently from, the first blade signal 110, the first auxiliary signal 210, the second blade signal 112, the third auxiliary signal 212, and the second auxiliary signal 310.

The first "B" value 132, the second "B" value 232, and the third "B" value 332 are communicated to a second physical value comparator 402, and compared to one another in the three-way comparison. The result of the comparator is communicated through the second comparator signal 412. In case of agreement, the comparator can conclude that all "B" values are trustworthy, and, hence, that the combination of second blade sensor 102, first sensor processor 150, and second blade-processing unit 122 is working properly.

In the prefer embodiment, the first comparator signal 410 and the second comparator signal 412 are sent to a root-cause analysis unit 420, which, in turn, produces a root-cause analyses signal 430 indicative of causes for the simultaneous value of first physical comparison signal 410 and second physical comparison signal 412. In particular, the root-cause analysis unit 420 performs additional signal logic and provides a more complete analysis of the overall state of the sensor systems. A combination matrix, as, for example, the one shown below, aids in the identification of the root cause for a signal deviation. For the sake of brevity, only a few signal combinations are shown.

| "A" value 130 | "A" value 230 | "A" value 330 | "B" value 132 | "B" value 232 | "B" value 332 | Conclusion | Label |
|---|---|---|---|---|---|---|---|
| p | p | p | q | q | q | All sensors ok. | c1 |
| r | p | p | q | q | q | partial blade sensor malfunction | c2 |
| p | p | p | s | q | q | partial blade sensor malfunction | c3 |
| p | r | p | q | q | q | first auxiliary sensor malfunction | c4 |
| p | p | r | q | q | q | second auxiliary sensor malfunction | c5 |
| r | p | p | s | q | q | full blade sensor malfunction | c6 |

Where "p", "q", "r", and "s" represent distinct signal values. In the first case, c1, all "A" and "B" values agree, respectively, with each other and, thus, indicates correct functioning of all six associated sensors. In the second case, c2, the first "A" value 130 differs from second "A" value 230 and third "A" value 330. This combination indicates an error in the computation of the first "A" signal 130, the error being caused by either a faulty first sensor signal 110, or a faulty first blade-processing unit 120. Likewise, the third case, c3, indicates either a faulty third sensor signal 102, or a faulty third blade-processing unit 122.

The fourth case listed indicates an error in the process leading to the second "A" value, namely an error in either the first auxiliary signal 210 or the first auxiliary processing unit 220. Similarly the fifth case, c5, in the table shows an error in either the second auxiliary signal 310 or the second auxiliary processing unit 320.

The last case, c6, shows a complete sensor failure due to either an unlikely event of simultaneous failure of the sensors 100 and 102 as well as the blade-processing units 120 and 122, or a more probable failure of the common processor 150. In the case the turbine has more than one blade, and in the preferred embodiment in which every blade is provided with the same type of sensors and corresponding to the embodiment of figure 7, further analysis can be done to improve the root cause analysis by performing a blade-to-blade comparison of the sensor signals, both in an instantaneous basis, as well as on the basis of comparisons with stored data of the complete turbine state at past times. The analysis can be further aided by performing a blade sensor recalibration and comparing new calibration results with stored results. These root-cause analysis steps are an example of the steps that can further taken once the first and second comparator signals provided by the invention are available.

It is clear to those in the art, that an alternative embodiment comprising combinations of the above listed embodiments of sensors and sensor signal topology are possible, and it is a straight forward exercise to combine the above described embodiment into a combined embodiment having the properties of each individual embodiment.

**List of reference numerical**

| | | | |
|---|---|---|---|
| **1** | Wind turbine | **220** | First auxiliary processing unit |
| **2** | Acoustic / Electromagnetic Wave | **222** | Third auxiliary processing unit |
| **3** | Nacelle | **230** | Second "A" value |
| **4** | Hub | **232** | Second "B" value |
| **10** | First blade | **300** | Second auxiliary sensor |
| **12** | Rotor axis | **302** | Fourth auxiliary sensor |
| **14** | Turbine tower | **310** | Second auxiliary signal |
| **20** | Second blade | **312** | Fourth auxiliary signal |
| **50** | SCADA signals | **320** | Second auxiliary processing unit |
| **100** | First blade sensor | **322** | Fourth auxiliary processing unit |
| **102** | Second blade sensor | **330** | Third "A" value |
| **104** | Third blade sensor | **332** | Third "B" value |
| **106** | Fourth blade sensor | **400** | First value comparator |
| **110** | First blade signal | **410** | First physical comparison signal |
| **112** | Second blade signal | **402** | Second physical valve comparator |
| **114** | Third blade signal | **412** | Second physical comparison signal |
| **116** | Fourth blade signal | **420** | Root-cause analysis unit |
| **120** | First blade-processing unit | **430** | Root-cause analysis signal |
| **122** | Second blade-processing unit | | |
| **130** | First "A" value | | |
| **132** | First "B" value | | |
| **150** | First sensor processor | | |
| **200** | First auxiliary sensor | | |
| **202** | Third auxiliary sensor | | |
| **210** | First auxiliary signal | | |
| **212** | Third auxiliary signal | | |

## Claims

1. A sensor system for a wind turbine (1) having a rotor and a first blade (10) on which a first blade sensor (100) is located, said first blade sensor (100) generating a first blade signal (110) indicative of at least one physical state of first blade (10), comprising:
- A first blade processing unit (120) receiving the first blade signal (110) and computing a first "A" value (130) indicative of a first loading value associated with the energy production of the wind turbine,
- A first auxiliary sensor (200) located on the wind turbine at a location different from the first blade (10), and generating a first auxiliary signal (210),
- A first auxiliary processing unit (220) receiving the first auxiliary signal (210) and computing a second "A" value (230) indicative of said first loading value, the computation being done without the use of, and independently of the first blade signal (110),
**Characterized by** further comprising:
- A third auxiliary sensor (300) located on the wind turbine (1) at a location different from the first blade (10), and generating a second auxiliary signal (310),
- A third auxiliary processing unit (320) receiving the third auxiliary signal (310) and computing a third "A" value (330) indicative of said first loading value, the computation being done without the use of, and independently of, the first blade signal (110) and the first auxiliary signal (210),
- A first physical value comparator (400) receiving the first "A" value (130), the second "A" value (230) and the third "A" values (330) producing a first physical comparison signal (402) indicative of the difference between the first "A" value (130) and the second "A" value (230), and the third "A" value (330), and produces a first physical comparison signal (410) indicative of all possible differences between the three A" values (130, 230,330.

2. The System as claimed in claim 1 wherein the first loading value comprises a rotor thrust along a rotor axis (12) direction of the wind turbine (1).

3. The System as claimed in claim 1 or 2 wherein the first blade processing unit (120) comprises a previously performed calibration procedure established a thrust rule and / or map for changing the blade signal (110).

4. The System as claimed in claim 1 wherein the first loading value comprises a rotor torque about the rotor axis (12).

5. The system as claimed in one or more of the previous claims wherein the first auxiliary sensor (200) is attached at a tower (14) of the wind turbine (1) and measures displacements along the a rotor axis (12) direction of the tower (14) relative to ground.

6. The System as claimed in claim 5 wherein the first auxiliary processing unit (220) comprises a previously performed calibration procedure established and is based on tower stiffness deduced from the geometry of the tower and the material properties of the tower material.

7. The system as claimed in one or more of the claims 1 to 4 wherein the first auxiliary sensor (200) is attached at a main rotor shaft of the turbine.

8. The system as claimed in one or more of claims 1 to 4 wherein the first auxiliary sensor (200) comprises a remote wind field measurement arrangement on base on the physical "Doppler effect".

9. The system as claimed in one or more of prevent claims wherein the second auxiliary sensor (300) is located outside the hub (4) of the wind turbine (1) detecting loading values of a turbine at this location.

10. The system as claimed in claim 9 wherein the physical state of the turbine at this location comprises the wind field characteristic behind the rotor of the wind turbine (1).

11. The system as claimed in claim 9 or 10 wherein the second auxiliary sensor (300) comprises a remote wind measurement devise like a anemometer or measurement arrangements base on the physical "Doppler effect".

12. The system as claimed in one or more of the previous claims, further comprising:
- A second blade sensor (102) located on the first blade (10) and generating a second blade signal (112),
- A second blade processing unit (122) receiving the second blade signal (112) and computing a first "B" value (132) indicative of a second load value associated with the wind turbine,
- A second auxiliary sensor (202) located on the wind turbine at a location different from the first blade (10), and generating a second auxiliary signal (212),
- A second auxiliary processing unit (222) receiving the second auxiliary signal (212) and computing a second "B" value (232) indicative of said second load value associated with the wind turbine, the computation being done without the use of, and independently of, the second blade signal (112)
- A fourth auxiliary sensor (302) located on the wind turbine at a location different from the second axillary sensor (300), and generating a fourth auxiliary signal (312) indicative of the second load value associated with the wind turbine (1),
- A fourth auxiliary processing unit (322) receiving the fourth auxiliary signal (312) and computing a third "B" value (332) indicative of said second loading value, the computation being done without the use of, and independently the second blade signal (112) and the second auxiliary signal (212),
- Wherein a second physical value comparator (401) receives the first "B" value (132) the second "B" value (232) and the third "B" value (332) and produces a second physical comparator signal (412) indicative of the difference between the three "B" values (132, 232, 332).

13. The System as claimed in one or more of the previous claims, further comprising:
- A third blade sensor (104) located on a second blade (20) and generating a third blade signal (114), indicative of a third loading value associated with the energy production of the wind turbine wherein the third blade signal (114) is carried together with the first blade signal (110) to the first blade processing unit (120).

14. The System as claimed in one or more of the previous claims, further comprising:
- A fourth blade sensor (106) located on the second blade (20) and generating a fourth blade signal (116), indicative of the third loading value associated with the energy production of the wind turbine wherein the fourth blade signal (116) is carried together with the second blade signal (112) to the second blade processing unit (122).

15. The system as claimed in one or more of the previous claims wherein the auxiliary processing units (220, 320, 322) comprise an interface communication with the main controller (SCADA System) of the wind turbine or other destinations.

16. The system as claimed in one or more of the previous claims, further comprising,
- A root-cause analysis unit (420) receiving the first physical comparator signal (402) and the second physical comparator signal (412) and producing a root-cause analysis signal (430) indicative of causes for the simultaneous value of first physical comparator signal (402) and second physical comparator signal (412).

17. A method for monitoring and processing of a sensor system according to one or more of claim 1 to 16 wherein the three "A" values (130, 230, 330) are communicated to the first physical value comparator (400) and compared to one another and the first physical comparison signal (402) is used as a fault isolation logic for identifying which of the three "A" signals is trustworthy or not.

18. A method according to claim 17 wherein further the result of the three-way comparison is communicated to the main turbine controller of the turbine (1) or to other destinations.

19. A method as claimed in claim 17 to 18 whereby further the "B" values (132, 232, 332) are communicated to the second physical value comparator (401) and compared to one another and the second physical comparison signal (412) is used as a fault isolation logic for identifying which of the three "B" signal is trustworthy or not.

20. A method according to claim 17 wherein the result of the second physical value comparator (410) is communicated to the main turbine controller (SCADA) or other destination.

21. A wind turbine having a rotor with at least one blade attached to the rotor and a sensor system according to one or more of the claims 1 to 16 and using the method for monitoring and processing of the blade sensor system according to one or more of claim 17 to 20.
